Europäisches Patentamt

European Patent Office

Office européen des brevets

(19)

(11) Publication number : **0 469 832 A2**

## (12) EUROPEAN PATENT APPLICATION

(21) Application number : **91306939.9**

(22) Date of filing : **29.07.91**

(51) Int. Cl.⁵ : **G06F 3/06**

(30) Priority : **01.08.90 JP 202543/90**

(43) Date of publication of application :
**05.02.92 Bulletin 92/06**

(84) Designated Contracting States :
**DE FR GB**

(71) Applicant : **KABUSHIKI KAISHA TOSHIBA**
**72, Horikawa-cho Saiwai-ku**
**Kawasaki-shi Kanagawa-ken Tokyo (JP)**

(72) Inventor : **Wada, Masamichi, c/o Int. Property**
**Division**
**Toshiba Corporation, 1-1-1 Shibaura**
**Minato-ku, Tokyo (JP)**

(74) Representative : **BATCHELLOR, KIRK & CO.**
**2 Pear Tree Court Farringdon Road**
**London EC1R 0DS (GB)**

(54) **Method and apparatus for memory access control.**

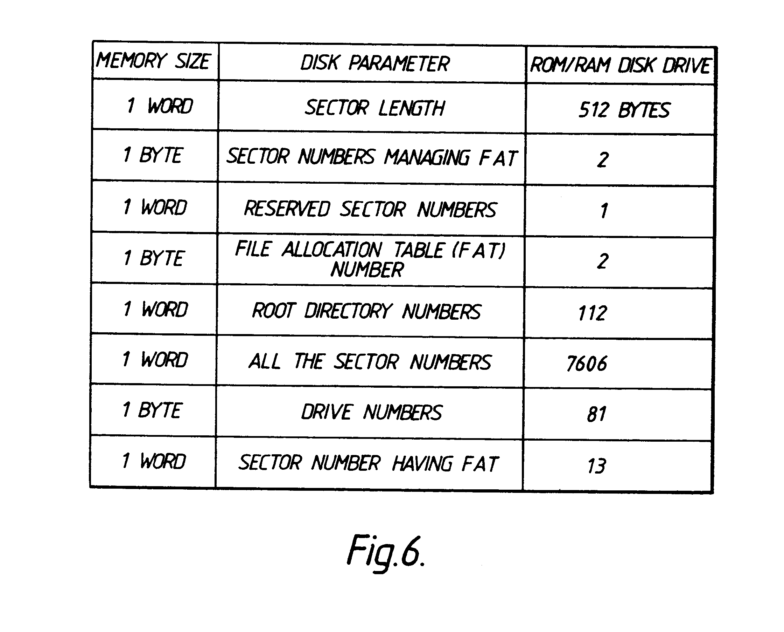

(57)    A memory access control apparatus in a computer system, which can treat a read only memory (ROM) disk (47) for permanently storing an operating program and random access memory (RAM) disk (49) as one disk file or as different files of the same virtual disk, such as a ROM/RAM disk (51), and control write/read access to the disk file, having a program for reading out disk file control information (53) stored in the ROM disk when the system is powered on, a program for changing the contents of the read-out disk file control information to that of disk file control information (Fig.6) for the ROM/RAM disk, a memory (77b) for storing the ROM/RAM disk file control information in a predetermined position, a program (43, 45) for determining an access-requested address for the ROM/RAM disk file in accordance with the ROM/RAM disk file control information, and a program (43, 45) for transferring data to a position corresponding to the determining address. Accordingly, the ROM disk and RAM disk can be controlled as a single disk, thus ensuring compatibility with the current BIOS.

EP 0 469 832 A2

| 53 | | | 51 | |
|---|---|---|---|---|
| READ ONLY | BOOT | | 1 SECTOR |
| 55 | | | |
| READ ONLY | FAT 1 | | 3 SECTORS |
| 57 | | | |
| READ/WRITE | | | ※ 1 |
| 59 | | | |
| READ ONLY | FAT 2 | | 3 SECTORS |
| 61 | | | |
| READ/WRITE | | | ※ 1 |
| 63 | | | |
| READ ONLY | ROOT DIRECTORY | | 3 SECTORS |
| 65 | | | |
| READ/WRITE | | | 4 SECTORS |
| 67 | | | |
| READ ONLY | DOS ROM DATA FILE | | 1426 SECTORS (512KB ROM) |
| 69 | EMPTY (NOT USED) | | 1048 SECTORS |
| 71 | | | |
| READ/WRITE | HARD RAM DATA FILE | | ※ 1 |

※ 1 ··· THIS MEMORY AREA CAPACITY DEPENDS THE HARD RAM MEMORY CAPACITY

Fig.4.

The present invention relates to a memory access control apparatus for use in a portable computer. More specifically, the present invention pertains to a ROM/RAM disk access apparatus and method for accessing ROM and RAM disks as a single memory disk or disk file.

Various types of computers, which are easy to carry around and are operable by an internal battery, are recently being developed. In a computer of this type, as file data increases, floppy disk drive devices (A) and (B) are assigned to the first and second disk drives, a hard disk drive device (C) to the third disk drive and a disk operating system ROM (DOS ROM) to the fourth disk drive. (A) through (C) stand for DOS drive numbers that DOS can control. When a user wants to deal with an enormous amount of data, a virtual disk drive (VDISK) has been used as an extended memory in this type of computer. The details of the prior art are given in the prior application, U.S. Patent No. 4,984,149.

With the conventional memory access control apparatus, however, what is stored in the VDISK will be lost when resetting or rebooting the operating system. Though the hardware has a function for extending memory, therefore, that function cannot be fully utilized.

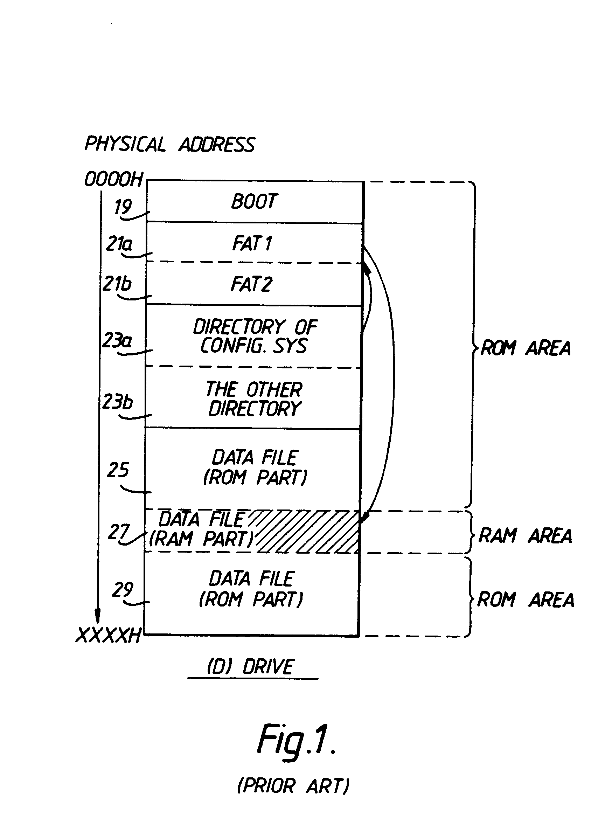

FIG.1 schematically illustrates the content of a disk file in the conventional ROM disk drive. Most part of the disk drive (D) 11 is constituted by the DOS ROM. Only a specific area is constituted by a RAM file where data can be written. The ROM area includes a BOOT 19, an FAT 21, a directory 23a for rewritable files, a directory 23b for the other files, fixed data storage areas 25 and 29 where operating system programs are stored. The RAM area includes only a writable file section 27. The file section 27 stores CONFIG.SYS which indicates the system configuration of a portable computer. CONFIG.SYS is a data file to control optional devices of non-standard functions which are not supported originally or initially when a user connects such optional devices to the portable computer or utilizes such functions. It is necessary that CONFIG.SYS will be installed on a DOS "system" disk to realize the above function. Since installing the DOS into a ROM prohibits data writing into the DOS disk, therefore conventionally only data in CONFIG.SYS of the DOS ROM is allowed to be written.

A conventional disk filing system performs memory control which can access only four disk drives because of the functional structure of the BIOS that controls disk files. Conventionally, an HDD is assigned to the fourth drive (C) out of the four drives based on the above-described conditions, so that a hard RAM cannot be assigned as a drive disk which the BIOS can control.

Further, such a disk filing system is premised on that data can be continuously read from or written into a disk file area. Changing the structure of this system requires alteration of the structure of the DOS, and the altered system cannot maintain its compatibility of the current types of computers.

## SUMMARY OF THE INVENTION

The present invention is devised to overcome the above-described problem.

It is therefore a primary object of the present invention to ensure I/O access control that permits a ROM disk and a RAM disk to be accessed as a single disk file.

It is another object of the present invention to treat the combination of a ROM disk and a RAM disk as a single disk drive to maintain compatibility to the current BIOS.

In accordance with the present invention, the foregoing objects, among others, are achieved by providing a memory access control apparatus in a computer system, which can treat a read only memory (ROM) disk for permanently storing an operating program and random access memory (RAM) disk as one disk file, such as a ROM/RAM disk file, and control write/read access to the disk file, comprising:

read means for reading out disk file control information stored in the ROM disk when the system is powered on;

set means for setting contents of the disk file control information read out by the read means to disk file control information for the ROM/RAM disk file;

storage means for storing the ROM/RAM disk file control information in a predetermined position;

means for determining an access-requested address for the ROM/RAM disk file in accordance with the ROM/RAM disk file control information stored in the storage means; and

means for transferring data to a position corresponding to the determined address.

Other objects, features, and advantages of the present invention will become apparent from the following detailed description. It should be understood, however, that the detailed description and specific examples while indicating preferred embodiments of the invention, are given by way of illustration only, since various changes and modification within the spirit and scope of the invention will become apparent to those skilled in the art from this detailed description.

## BRIEF DESCRIPTION OF THE DRAWINGS

Other objects and features of the present invention will be apparent from the following description taken in connection with the accompanying drawings, of which:

FIG. 1 is a view showing address assignment of a conventional DOS ROM disk fille;

FIG. 2 is a view showing the principle of a ROM/RAM disk file according to the present invention;

FIG. 3 is a block diagram of a memory access control apparatus for controlling a ROM/RAM disk file according to an embodiment of the present invention;

FIG. 4 is a view showing address assignment of a ROM/RAM disk file in FIG. 3;

FIG. 5 is a flow chart of the operation of the embodiment in FIG. 4;

FIG. 6 is a BFB information table in order for a memory access control apparatus to be accessed in a ROM/RAM disk file; and

FIG. 7 is a view showing address assignment of a standard memory in a portable computer.

## DETAILED DESCRIPTION OF THE PREFERRED EMBODIMENT

A preferred embodiment of the present invention will now be described referring to the accompanying drawings.

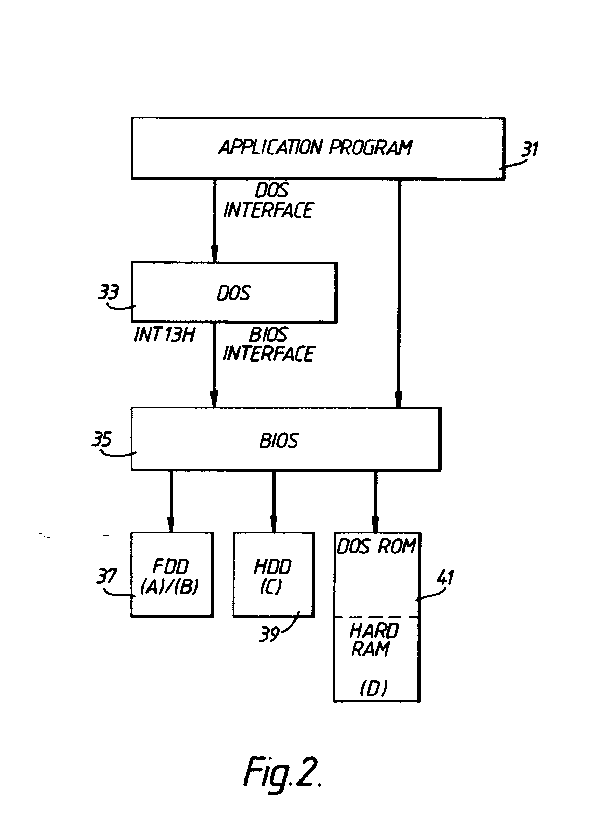

FIG. 2 illustrates the principle of the embodiment of the present invention from a viewpoint of software. An input/output access request from an application program 31 is sent to a DOS 33 through a DOS interface, or to a BIOS 35 directly. The DOS 33 executes INT 13H (for example, a software interrupt command issued from 80286, a 16-bit microprocessor by Intel Inc.) through a BIOS interface to control an FDD (A)/(B) 37, an HDD (C) 39 and a ROM/RAM disk (D) 41. The INT 13H is a function call of the BIOS 35 to access and control the FDD and the HDD. The DOS 33 is a system program for controlling the application program 31, memory management and an interrupt. The BIOS 35 controls access to both a DOS ROM and a hard RAM as a single disk drive 41. (A method for the access controlling will be described later.) The DOS ROM portion in the ROM/RAM disk 41 is a ROM area where the DOS is stored, while the hard RAM portion is a RAM area. Since the hard RAM is backed up with a battery, data will be saved in the RAM even with the system power turned off. The application program 31 and the DOS 33 are the same as the ones conventionally used. A program for controlling access to complete ROM and RAM disks as a single disk file is installed in the BIOS 35.

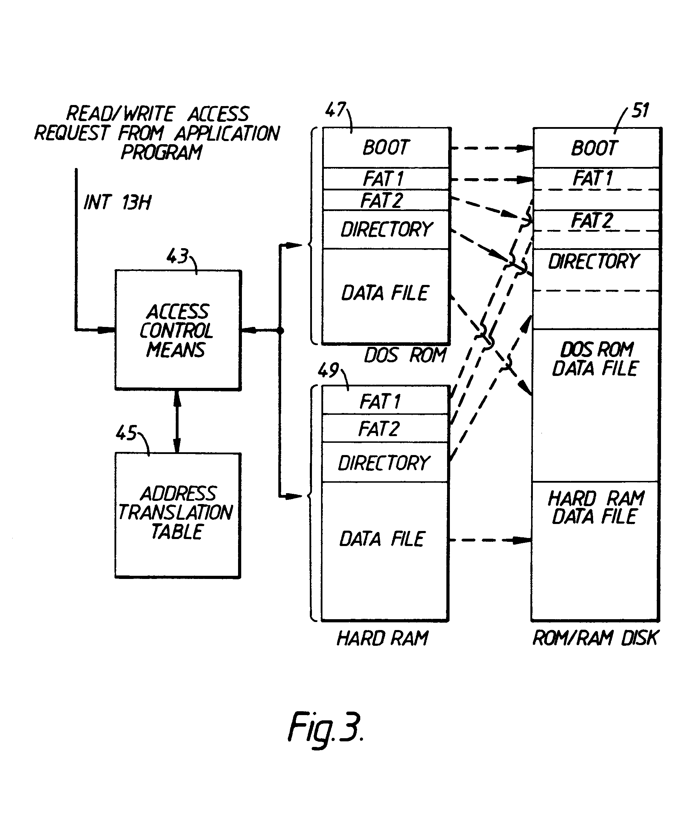

FIG. 3 Is a block diagram illustrating the system configuration of the memory access control apparatus according to the embodiment of the present invention. An access control means 43 of the BIOS, when receiving an I/O request from the application program, performs address translation to designate a target address in the ROM/RAM disk, reads out data from the ROM/RAM disk, or writes data from the application program. An address translation table 45 stores BIOS parameter block information (to be explained in detail later) for controlling access to ROM/RAM disk file as one disk file. The address Dtranslation table 45 also stores information for selecting a ROM disk or RAM disk, and a target offset for designating an address to the a ROM disk or RAM disk. The access control means 43 executes ROM/RAM disk selection and address translation, referring to the address translation table 45. A DOS ROM disk file 47 is a read-only disk file where the DOS program is stored. A RAM disk 49 is a read/write disk file in which the application program is stored. A ROM/RAM disk 51 is to be accessed by the access control means 43, with the ROM disk file 47 and the RAM disk file 49 treated as a single disk drive (to be described in detail later).

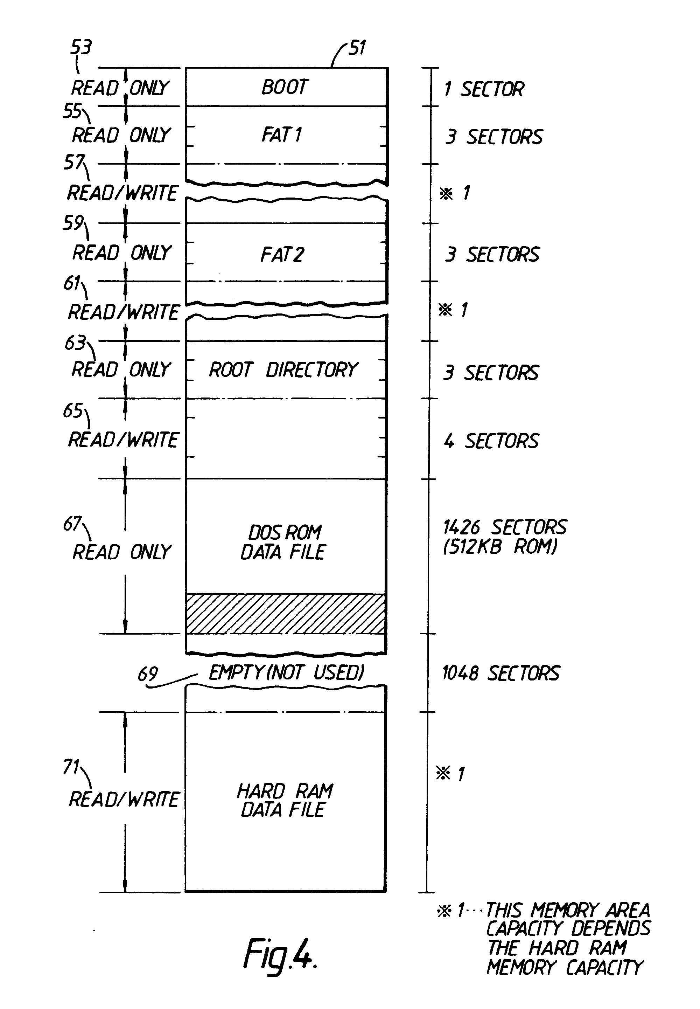

FIG. 4 illustrates an address assignment to the ROM/RAM disk file 51 shown in FIG. 3. According to the present invention, the ROM/RAM disk file 51 is prepared in a format for double sided double density double tracks (2DD) for the purpose of descriptive simplification. A BOOT area 53, stored in the ROM disk file 47, saves one sector (about 0.5 KB) of information that identifies the ROM disk file 47. When the system starts working, an initial reliability test (IRT) program in the ROM BIOS executes a bootstrap loader stored in the BOOT 53 to automatically load the DOS and other programs, which are stored in the ROM disk, one after another. File allocation tables (FATs) 55, 57 and 59, constituted by a 6-sector ROM disk and a RAM disk, indicate how and where in the ROM/RAM disk 51 data file areas 67, 69 and 71 are allocated. The number of sectors of the FAT depends on the memory capacity of the hard RAM. There are usually two FATs present in the FAT area, so that even if one FAT is damaged, the other FAT can serve as a backup. Root directories 63 and 65 are constituted by three sectors of the ROM disk file 47 and four sectors of the hard RAM disk 49. The name and byte size of a file, and the latest date and time for creating/updating the file are written into the root directories. Data file areas 67, 69 and 71 are constituted by 1426 sectors of the ROM disk file 47 and the hard RAM 49. All of the programs, texts and data on the ROM/RAM disk 51 are stored in the data file areas. The ROM disk area of each data file stores a DOS program. The files stored in the data file areas are given specific names. In the case that the ROM disk 47 and the hard RAM 49 are accessed and controlled as a continuous disk file, memory areas are allocated in the units of sectors. This produces an empty area for 1048 sectors in the data file area.

When the disk file is prepared in the 2DD format by the above-described method, the memory capacity of the file depends on the number of FATs, and the data area has the size of 4078 KB. In consideration of the empty space in the data file area, therefore, the maximum size of the hard RAM disk 49 available is 3056 KB. In this case, nine sectors of a file are allocated to the FAT 1 in the hard RAM disk 49, nine sectors to the FAT 2, four sectors to the root directory, and 6112 sectors to the data file area. Further, since the hard RAM disk 49 includes a checksum function, a one-track data area (16 KB) should be provided. As a result, the total memory area of the hard RAM disk 49 can use is 3083 KB at the maximum.

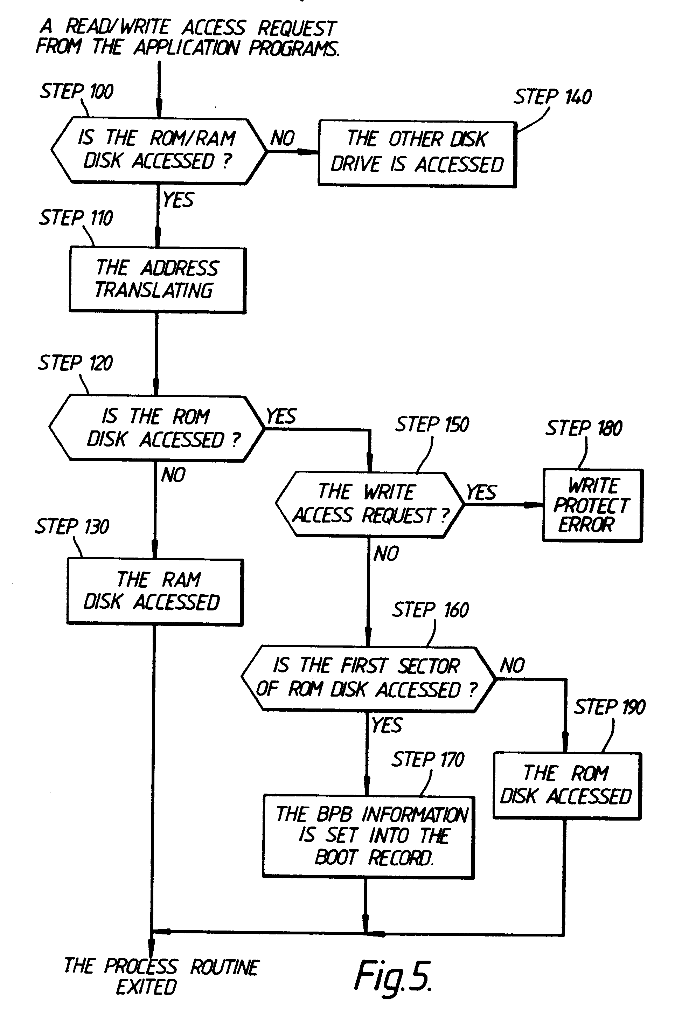

FIG. 5 is a flow chart showing a method for accessing to the ROM/RAM disk file 51 according to the present invention.

FIG. 6 illustrates a BIOS parameter block (BPB information) for the memory access control apparatus to control access to a ROM disk and a RAM disk as one disk file.

The operation in the flow chart shown in FIG. 5 will be described referring to FIG. 6. The interrupt of INT 13H is received from the application program. In accordance with a designated drive number, it is determined in step 100 whether the INT 13H is an I/O access request to the ROM/RAM disk file 51, i.e., If an access address and a transfer length is of a sector type. The address control means 43, upon reception of the I/O access request from the application program, determines if the target address for access is the ROM/RAM disk file 51 or the other disk. When the address control means 43 determines that the I/O request is not for the ROM/RAM disk file 51, the routine advances to step 140. On the other hand, when the address control means 43 determines in step 100 that the request is made for the ROM/RAM disk file 51, the routine advances to step 110. In step 110, using the address translation table 45 and the stored BPB information (a cylinder number, a head number, a sector length, etc), the ROM disk 47 or the RAM disk 49 is selected, and the access address and byte size of the selected disk are computed. It is determined in step 120 whether or not the address-access target is the ROM disk 47. When it is determined that access to the ROM disk 47 has been requested, the routine advances to step 150. When it is determined in step 120 that the access request is not for the ROM disk 47, the routine advances to step 130. The RAM disk 49 is accessed in step 130. After the process in step 130 is completed, the routine will be terminated.

It is determined in step 150 whether the request is a write access request to the ROM disk 47. When the request is judged as such in step 150, the routine advances to step 180. In step 180, an operator is informed of a write protect error to the write access request to the ROM disk 47 by a FORMAT command from the application program, etc. When it is determined in step 150 that the write access request has not been made, the process routine advances to step 160. It is determined in step 160 whether the first sector of the ROM disk 47 is access-requested. When it is determined in step 160 that the access is requested, the routine advances to step 170. In step 170, when the head address of the ROM disk 47 is to be accessed, BPB information to be stored in the BOOT area is again set as status information of the ROM/RAM disk file 51 in FIG. 6. The set BPB information is normally stored again in the BOOT area in the disk file; however, according to the present invention, the BPB information is stored in part of the BIOS area which is assigned to the standard memory area of a portable computer because the ROM disk 47 is a disk file. When it is determined in step 160 that access to the first sector of the ROM disk 47 has not been requested, data in the ROM disk 47 is accessed for data reading in step 190, based on the I/O request from the application program. Then, the routine is terminated.

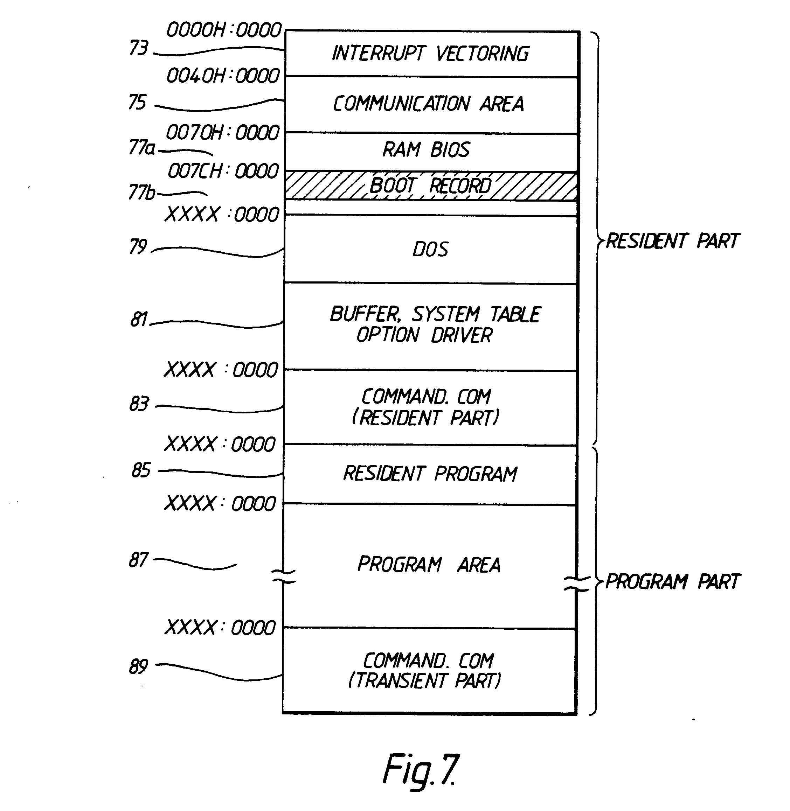

FIG. 7 illustrates address assignment in a standard memory which is actually loaded in a portable computer. An interrupt vectoring area 73 is a program that the interrupt service of a processor jumps to a specific address on the memory when an interrupt from the application program occurs. A communication area 75 is a work area for the ROM BIOS. A RAM BIOS 77, different from the ROM BIOS, is incorporated in the ROM disk 47 and is constituted by a program 77a that controls a display I/O, such as INT 10H, and a VRAM, and a BOOT record 77b that stores the aforementioned BPB information. A DOS 79 controls the system and memory of a portable computer. An area 81 stores an option driver for driving a buffer, a system table and a VDISK. A COMMAND.COM resident part 83, an area common to commands, stores a program for loading a check sum and an application program in a transient part, or the like, into the standard memory. A resident program 85 is an area where a user can execute his desired program, independently of the execution of the application program. A program area 87 stores the application program. A COMMAND.COM transient part 89 stores a command processor, translates a command input by a user, and executes a DOS program. The areas 73 to 83 are called "resident part" and are always set in the standard memory, while the areas 85 to 89 are called "program area."

Referring to FIG. 7, a description will be given of the process at the time of system initialization in the case that the ROM disk 47 and the RAM disk 49 are controlled as a single disk file. With the portable computer powered on, an IRT stored in the ROM BIOS (not shown) is invoked, and various tests on the computer are executed, for example, checking on the memory capacities and installed statuses of the ROM disk and the RAM disk. When no fatal errors occur in the system, the IRT determines in which disk a BOOT record should be stored. According to the present invention, the BOOT record is to be stored in the ROM disk 47, and the IRT checks the presence of the BOOT record in the ROM disk 47. Then, a program (a bootstrap loader, or IPL) stored in the BOOT record 53 in FIG.5 is invoked. the IPL sets BPB information shown in FIG. 7 into the BOOT record 77b in FIG. 8, based on the total size of the ROM disk 47 and the hard RAM disk 49 (The IPL may store the BPB information of the ROM/RAM disk file as system setup information into a CMOS RAM memory backed up by a battery). In this case, the IPL reads the BPB information stored in the RAM, and sets it to the BOOT record 77b. To control access to the ROM disk 47 independently of the hard RAM 49, the BPB information of the ROM disk 47 is stored in the BOOT record 77b as the fourth disk file information access to which is controlled by the BIOS.

The BPB information for a ROM/RAM disk file cannot be stored in the ROM disk 47, as described above. Therefore, a BOOT record is provided at the physical address 7C0H in the standard memory (640 KB) of the portable computer. Based on the BPB information stored in the BOOT record, the IPL sequentially loads the DOS program and the like stored in the DOS ROM disk 47 at a predetermined address in the standard memory. The DOS program loaded in the memory executes various operations under its own control.

With this structure, the BIOS sets the BPB information in the BOOT record 77b in the standard memory, and with the system activated, therefore, at the time of system initialization, it is easy to select whether the ROM disk 47 and the RAM disk 49 should be treated as separate disk files to be controlled by the BIOS, or whether the ROM disk 47 and the RAM disk 49 should be treated as one disk file.

Numerous modifications and variations of the present invention are possible in light of the above teachings.

It is therefore to be understood that, within the scope of the appended claims, the present invention can be practiced in a manner other than as specifically described herein.

**Claims**

1. A memory access control system for a computer, comprising a ROM containing permanently stored operating programs, and a battery-backed random access (RAM) memory area, characterised in that the said ROM and RAM are arranged as disk files of a common virtual memory disk.

2. A memory access control apparatus according to claim 1 for a computer system, comprising a read only memory (ROM) disk (47) for permanently storing an operating program and battery-backed-up random access memory (RAM) disk (49) which are arranged to operate as files of the same virtual disk;

means for determining an access-requested address for the ROM/RAM disk file (43, 45), and means for transferring data to a position corresponding to the determining address (43, 45);

read means for reading out disk file control information (53) stored in the ROM disk (47) when the system is powered on;

means for changing contents of the disk file control information read out by the road means to those of the ROM/RAM disk file control information (91); and

storage means for storing the ROM/RAM disk file control information (91) in a predetermined position (77b).

3. An apparatus according to claim 1 or claim 2, the system including an area of conventional memory, and characterized by further comprising means for setting the disk file control information in the conventional memory (77b).

4. An apparatus according to claim 2 or claim 3 characterized in that the disk file control information (91) includes the size of one sector, the number of sectors per allocation unit, the number of reserved sectors, the number of File Allocation Tables (FATs) the number of items in the root directory, the total number of sectors, the medium identification code and the number of sectors for the FATs.

5. An apparatus according to any of claims 2 to 4 characterized in that the read means out the ROM disk file control information stored at the first sector (53) in the ROM disk file (47).

6. An apparatus according to any of claims 2 to 5 characterized by further comprising:

means for determining, based on preset system setup information whether or not the disk file control information read out by the read means is to be changed to ROM/RAM disk file control information (91); and

control means (35) for controlling write/read access to the ROM disk file (47) independently of the RAM disk file (49) using the ROM disk file control information when there is no alteration to the ROM/RAM disk file control information in accordance with the determination result.

7. An apparatus according to claim 6, characterized by further comprising means for storing the setup information in a predetermined area of battery-backed-up memory.

8. A method of controlling access to a ROM disk file (47) and a RAM disk file (49) as files of a single ROM/RAM disk (51), characterized by comprising the steps of:

reading out disk file control information stored in the ROM disk file when a computer system is powered on;

changing the disk file control information read out in the reading step to disk file control information (91) for the ROM/RAM disk file;

storing the ROM/RAM disk file control information at a predetermined memory location (77b);

determining (43, 45) an access-requested address for the ROM/RAM disk file in accordance with the stored ROM/RAM disk file control information; and

transferring (43, 45) data to a position corresponding to the determined address.

9. The method according to claim 8 further characterized in that the battery backed memory includes the ROM/RAM disk file information (91).

10. A method of controlling access to a ROM disk file (47) and RAM disk file (49) as files of single ROM/RAM disk (51), characterized by the steps of:

reading out disk file control information (53) stored in the ROM disk file when the system is powered on;

determining, on the basis of preset system setup information whether or not the ROM disk file and RAM disk file are to be accessed files of a single ROM/RAM disk; and

controlling (43, 45) write/read access to the ROM disk file independently of the RAM disk file using the ROM disk file control information (53) when no access control of the ROM/RAM disk file is required in accordance with the determination result.

11. A method according to claim 10, characterized by further comprising the step of setting ROM/RAM disk file control information (91) again at a predetermined memory location (77b) when a request to access ROM disk file control information is made while the system is executing a process.

12. Apparatus according to any of claims 1 to 7 in which the ROM and RAM disk files are arranged to be treated as different parts of the same disk data file.

13. A method according to any of claims 8 to 12 in which the ROM and RAM disk information are stored in the same data file.

14. A computer having memory access means according to any of claims 1 to 7.

PHYSICAL ADDRESS

**Fig.1.**

(PRIOR ART)

Fig.2.

READ/WRITE ACCESS
REQUEST FROM APPLICATION
PROGRAM

INT 13H

43

ACCESS
CONTROL
MEANS

45

ADDRESS
TRANSLATION
TABLE

47

| BOOT |
| FAT 1 |
| FAT 2 |
| DIRECTORY |
| DATA FILE |

DOS ROM

49

| FAT 1 |
| FAT 2 |
| DIRECTORY |
| DATA FILE |

HARD RAM

51

| BOOT |
| FAT 1 |
| FAT 2 |
| DIRECTORY |
| DOS ROM DATA FILE |
| HARD RAM DATA FILE |

ROM/RAM DISK

Fig.3.

53 ............ 51

| | | |
|---|---|---|
| READ ONLY | BOOT | 1 SECTOR |
| 55 | | |
| READ ONLY | FAT 1 | 3 SECTORS |
| 57 | | |
| READ/WRITE | | ※ 1 |
| 59 | | |
| READ ONLY | FAT 2 | 3 SECTORS |
| 61 | | |
| READ/WRITE | | ※ 1 |
| 63 | | |
| READ ONLY | ROOT DIRECTORY | 3 SECTORS |
| 65 | | |
| READ/WRITE | | 4 SECTORS |
| 67 | DOS ROM DATA FILE | 1426 SECTORS (512KB ROM) |
| READ ONLY | | |
| 69 | EMPTY (NOT USED) | 1048 SECTORS |
| 71 | HARD RAM DATA FILE | ※ 1 |
| READ/WRITE | | |

※ 1···THIS MEMORY AREA CAPACITY DEPENDS THE HARD RAM MEMORY CAPACITY

Fig.4.

11

A READ/WRITE ACCESS REQUEST
FROM THE APPLICATION PROGRAMS.

STEP 100

IS THE ROM/RAM
DISK ACCESSED ?

NO →

STEP 140

THE OTHER DISK
DRIVE IS ACCESSED

YES

STEP 110

THE ADDRESS
TRANSLATING

STEP 120

IS THE ROM
DISK ACCESSED ?

YES →

STEP 150

THE WRITE
ACCESS REQUEST ?

YES →

STEP 180

WRITE
PROTECT
ERROR

NO

STEP 130

THE RAM
DISK ACCESSED

NO

STEP 160

IS THE FIRST SECTOR
OF ROM DISK ACCESSED ?

NO →

STEP 190

THE ROM
DISK ACCESSED

YES

STEP 170

THE BPB INFORMATION
IS SET INTO THE
BOOT RECORD.

THE PROCESS ROUTINE
EXITED

Fig. 5.

12

| MEMORY SIZE | DISK PARAMETER | ROM/RAM DISK DRIVE |
|---|---|---|
| 1 WORD | SECTOR LENGTH | 512 BYTES |
| 1 BYTE | SECTOR NUMBERS MANAGING FAT | 2 |
| 1 WORD | RESERVED SECTOR NUMBERS | 1 |
| 1 BYTE | FILE ALLOCATION TABLE (FAT) NUMBER | 2 |
| 1 WORD | ROOT DIRECTORY NUMBERS | 112 |
| 1 WORD | ALL THE SECTOR NUMBERS | 7606 |
| 1 BYTE | DRIVE NUMBERS | 81 |
| 1 WORD | SECTOR NUMBER HAVING FAT | 13 |

## Fig.6.

| Address | Region | Part |
|---------|--------|------|
| 0000H:0000 | INTERRUPT VECTORING | RESIDENT PART |
| 0040H:0000 | COMMUNICATION AREA | |
| 0070H:0000 | RAM BIOS | |
| 007CH:0000 | //////// BOOT RECORD //////// | |
| XXXX:0000 | DOS | |
| | BUFFER, SYSTEM TABLE OPTION DRIVER | |
| XXXX:0000 | COMMAND. COM (RESIDENT PART) | |
| XXXX:0000 | RESIDENT PROGRAM | PROGRAM PART |
| XXXX:0000 | PROGRAM AREA | |
| XXXX:0000 | COMMAND. COM (TRANSIENT PART) | |

Fig. 7.